# EUROPÄISCHE PATENTSCHRIFT

(11) **EP 4 537 442 B1**
(45) Veröffentlichungstag und Bekanntmachung des Hinweises auf die Patenterteilung: **22.04.2026**
(21) Anmeldenummer: 23727230.7
(22) Anmeldetag: 09.05.2023
(51) Int. Cl.: H02K 7/102, H02K 7/116

(54) **GETRIEBEMOTOR UND SYSTEM MIT STEUERELEKTRONIK UND GETRIEBEMOTOR**
GEARED MOTOR AND SYSTEM WITH CONTROL ELECTRONICS AND GEARED MOTOR
MOTORÉDUCTEUR ET SYSTÈME COMPRENANT UNE ÉLECTRONIQUE DE COMMANDE ET UN MOTORÉDUCTEUR

(30) Priorität: 06.06.2022 CN 202210630496; 14.09.2022 DE 102022003390
(43) Veröffentlichungstag der Anmeldung: 16.04.2025
(73) Patentinhaber: SEW-EURODRIVE GmbH & Co. KG, 76646 Bruchsal (DE)
(72) Erfinder: QIONGHUA, Gao, Tianjin (CN)
(86) Internationale Anmeldenummer: PCT/EP2023/025220
(87) Internationale Veröffentlichungsnummer: WO 2023/237223

(56) Entgegenhaltungen:
- EP-A1- 1 914 154
- EP-B1- 2 633 604
- CN-U- 212 163 062
- DE-A1- 102020 207 403
- DE-B- 1 148 054

## Beschreibung

Die Erfindung betrifft einen Getriebemotor und ein System mit Steuerelektronik und Getriebemotor.

Es ist allgemein bekannt, zum Abbremsen eines Motors eine Bremse am Motor anzuordnen.

Aus der DE 691 10 745 T2 ist eine elektromechanische Antriebseinrichtung mit Notfallvorrichtung bekannt.

Aus der DE 10 2020 207 403 A1 ist eine Antriebseinheit für ein Flurförderzeug bekannt.

Aus der DE 10 2010 049 744 A1 ist eine Bremse bekannt.

Aus der DE 10 2010 049 747 A1 ist ein Bausatz zur Herstellung unterschiedlicher Elektromotoren einer Baureihe von Elektromotoren bekannt.

Aus der DE 10 2010 049 748 A1 ist ein Elektromotor bekannt.

**Aus der** CN 212 163 062 U **ist als nächstliegender Stand der Technik ein Getriebemotor bekannt.**

**Aus der** EP 1 914 154 A1 **ist ein Trommelantrieb bekannt.**

**Aus der** DE 11 48 054 B **ist eine Hubwinde für Aufzüge bekannt.**

**Aus der** EP 2 633 604 B1 **ist ein Bausatz zur Herstellung unterschiedlicher Elektromotoren einer Baureihe von Elektromotoren bekannt.**

**Aus der** DE 10 2020 207 403 A1 **ist eine Antriebseinheit für ein Flurförderfahrzeug bekannt.**

Der Erfindung liegt daher die Aufgabe zugrunde, eine die Sicherheit beim Abbremsen weiterzubilden.

Erfindungsgemäß wird die Aufgabe bei dem Getriebemotor nach den in Anspruch 1 angegebenen Merkmalen gelöst.

Wichtige Merkmale der Erfindung bei dem Getriebemotor sind, dass der Getriebemotor ein Getriebe und einen Elektromotor aufweist,
wobei die Rotorwelle des Elektromotors mit einem ersten Verzahnungsteil, insbesondere Ritzel oder Zahnrad, des Getriebes drehfest verbunden ist,
wobei das erste Verzahnungsteil mit einem zweiten Verzahnungsteil kämmt und/oder im Eingriff ist,
wobei das zweite Verzahnungsteil mit einer Zwischenwelle drehfest verbunden ist, welche mittels eines ersten Lagers und eines zweiten Lagers im Getriebe drehbar gelagert ist,
wobei eine erste Bremse zum Abbremsen der Zwischenwelle auf der vom Elektromotor abgewandten Seite des Getriebes angeordnet ist,
wobei zwischen dem Elektromotor und dem Getriebe eine zweite Bremse zum Abbremsen der Rotorwelle angeordnet ist,
Von Vorteil ist dabei, dass die zweite Bremse redundant verwendbar ist. Wenn also die erste Bremse zwar einen Aktivierungsbefehl erhält, während die zweite Bremse gelüftet ist, ist nach Erkennen des Versagens der ersten Bremse die zweite Bremse aktivierbar. Somit ist die Sicherheit verbessert.

Außerdem ist im Normalbetrieb die erste Bremse mit einer niedrigeren Drehzahl betrieben, da die erste Bremse nicht auf die Rotorwelle wirkt, sondern auf die Zwischenwelle, Deren Drehzahl ist entsprechend der Übersetzung der ersten Getriebestufe heruntergesetzt. Zwar ist das Drehmoment entsprechend größer, aber die Drehzahl niedriger. Bei geeigneter Materialwahl der Bremsbeläge, die auf einem jeweiligen Bremsbelagträger axial beidseitig angeordnet sind, ist somit ein geringerer Verschleiß bewirkbar - insbesondere auch bei gleicher Bremsleistung.

Alternativ ist aber auch eine Aktivierung beider Bremsen gleichzeitig ausführbar, so dass ein erhöhtes Bremsmoment bewirkbar ist.

Bei Versagen der ersten Getriebestufe, insbesondere bei beispielsweisem Versagen der Verzahnung des eintreibenden Ritzels, wäre die Bremswirkung der zweiten Bremse nicht mehr relevant für die abtreibende Welle des Getriebes. Jedoch ist erfindungsgemäß der Bremswirkung der ersten Bremse weiterhin relevant für die abtreibende Welle des Getriebes. Darüber hinaus ist erste Bremse mittels der zweiten und gegebenenfalls höheren Getriebestufen vor einer Überlastung geschützt.

Bei geeigneter Dimensionierung ist die erste Bremse und die zweite Bremse gleich groß, insbesondere also mit gleichem Nennbremsmoment ausführbar.

Vorzugsweise werden die Bremsen aber auch als Haltebremsen betrieben, also bei Drehzahl Null oder zum Abbremsen von sehr kleinen Drehzahlen um Null herum, für die allerdings trotzdem die Übersetzung der ersten Getriebestufe wirksam ist.

Bei einer vorteilhaften Ausgestaltung weist das Gehäuse des Getriebes ein Unterteil und mit dem Unterteil verbundenes Deckelteil auf,

insbesondere wobei eine Flachdichtung zwischen Unterteil und Deckelteil angeordnet ist,
insbesondere wobei das Getriebe explosionsgeschützt ausgeführt ist. Von Vorteil ist dabei, dass eine möglichst hohe Schutzart, also Sicherheit, erreichbar ist, insbesondere Zündschutzart d.

Bei einer vorteilhaften Ausgestaltung ist das erste Lager im Unterteil und das zweite Lager im Deckelteil aufgenommen,
wobei der Innenring des ersten Lagers auf die Zwischenwelle aufgesteckt ist und der Innenring des zweiten Lagers auch auf die Zwischenwelle aufgesteckt ist. Von Vorteil ist dabei, dass die Lagerung in zwei verschiedenen Teilen ausgeführt ist. Somit ist ein einfacher Zusammenbau bei der Herstellung ermöglicht. Jedoch muss die erste Bremse relativ zum Deckelteil sehr genau ausgerichtet werden, wie auch das Deckelteil zum Unterteil.

Zu diesem genauen Ausrichten ist die geschliffene ebene Kreisringfläche an der Außenseite des Deckelteils hochpräzise zur Lageraufnahme des zweiten Lagers ausgerichtet. Vorteiligerweise wird die spanende Bearbeitung des Deckelteils hierzu in einer einzigen Aufspannung in einer Werkzeugmaschine ausgeführt - auch wenn die Kreisringfläche an der Außenseite und die Lageraufnahm an der Innenseite des Deckelteils angeordnet ist.

Gemäß der Erfindung, ist die abtreibende Welle des Getriebes von der Zwischenwelle und von der Rotorwelle beabstandet,
insbesondere wobei die Zwischenwelle parallel zur Rotorwelle ausgerichtet ist,
insbesondere wobei die Zwischenwelle parallel zur abtreibenden Welle ausgerichtet ist. Von Vorteil ist dabei, dass das Getriebe als Parallelwellengetriebe ausgeführt ist.

Bei einer vorteilhaften Ausgestaltung ist die einzige durch das Deckelteil hindurchragende Welle die Zwischenwelle. Von Vorteil ist dabei, dass der Bereich der herausragenden Welle gehäusebildend von der ersten Bremse umgeben ist, welche in hoher Schutzart ausgeführt und dicht verbunden ist mit dem Getriebe, insbesondere ebenfalls in hoher Schutzart.

Bei einer vorteilhaften Ausgestaltung ist ein Verzahnungsteil drehfest mit der abtreibenden Welle verbunden, das im Eingriff ist mit einem mit der Zwischenwelle drehfest verbundenen Zahnrad. Von Vorteil ist dabei, dass die abtreibende Welle ein hohes Drehmoment durchleitet.

Bei einer vorteilhaften Ausgestaltung ist das Gehäuse der ersten Bremse mit dem Deckelteil verbunden,
und/oder
das Gehäuse der zweiten Bremse ist einerseits mit dem Unterteil und andererseits mit einem Gehäuseteil, insbesondere Flanschteil, des Elektromotors, verbunden. Von Vorteil ist dabei, dass das Reaktionsmoment der ersten Bremse an das Deckelteil und das Reaktionsmoment der zweiten Bremse an das Unterteil, also an ein anderes Teil als das Deckelteil, abgeleitet wird. Somit sind die beiden Teile durch das Reaktionsmoment nicht überlastbar und die Steifigkeit sicherbar. Dies trägt zu einer erhöhten Sicherheit bei, da ein Versagen der Teile verhinderbar ist.

Bei einer vorteilhaften Ausgestaltung ist auf der von der zweiten Bremse axial abgewandten Seite des Elektromotors eine Lüfterhaube am Gehäuse des Elektromotors befestigt,
wobei die Lüfterhaube einen drehfest mit der Rotorwelle verbundenen Lüfter umgibt. Von Vorteil ist dabei, dass die zweite Bremse vollständig eingekapselt von ihrem Gehäuse ausführbar ist. Der Luftstrom des Lüfters kann somit direkt auf den Motor geleitet werden und muss nicht eine eingekapselte, insbesondere explosionsgeschützte, Bremse überqueren, um zum Motor zu gelangen. Die Überhitzung ist somit vermeidbar und dadurch die Sicherheit erhöht. Insbesondere ist die Zündschutzart d erreicht, insbesondere gemäß EN 60079-0:2009.

Bei einer vorteilhaften Ausgestaltung weist die erste Bremse einen ersten Bremsbelagträger auf,
wobei der Bremsbelagträger eine Innenverzahnung aufweist,
wobei ein erster ringartiger Mitnehmer auf die Zwischenwelle aufgesteckt ist und drehfest mit der Zwischenwelle, insbesondere mittels Passfederverbindung, verbunden ist,
wobei der erste Bremsbelagträger derart auf den ersten Mitnehmer aufgesteckt ist, dass die Innenverzahnung mit der Außenverzahnung im Eingriff ist. so, dass der erste Bremsbelagträger drehfest mit dem ersten Mitnehmer verbunden ist und in axialer Richtung relativ zum ersten Mitnehmer verschiebbar ist,
wobei ein erster Magnetkörper mit dem Gehäuse der ersten Bremse verbunden ist, insbesondere fest verbunden,
insbesondere wobei der Magnetkörper und das Gehäuse der ersten Bremse zusammen einstückig ausgeführt sind,
wobei das Gehäuse der ersten Bremse mit dem Deckelteil des Getriebes verbunden ist,
wobei eine erste Ankerscheibe axial zwischen dem ersten Bremsbelagträger und dem ersten Magnetkörper angeordnet ist,
wobei die erste Ankerscheibe mit dem ersten Magnetkörper drehfest verbunden ist und in axialer Richtung relativ zum ersten Magnetkörper verschiebbar angeordnet ist,
wobei am ersten Magnetkörper abgestützte erste Federelemente, insbesondere in Umfangsrichtung voneinander gleichmäßig beabstandete erste Federelemente, auf die erste Ankerscheibe drücken,
wobei im ersten Magnetkörper eine erste Wicklung aufgenommen ist, insbesondere wobei im ersten Magnetkörper eine erste Wicklung, insbesondere Ringwicklung, in einer ersten ringförmigen Vertiefung des ersten Magnetkörpers aufgenommen ist und/oder stoffschlüssig verbunden ist,
wobei auf der von der ersten Ankerscheibe abgewandten Seite des ersten Bremsbelagträgers eine erste Bremsfläche am Gehäuse, insbesondere an einer Innenseite des ersten Gehäuses, der ersten Bremse ausgebildet ist,
insbesondere wobei am ersten Magnetkörper befestigte erste Bolzen jeweils durch eine jeweilige Ausnehmung der ersten Ankerscheibe ragen oder hindurchragen,
insbesondere wobei der erste Bremsbelagträger axial beidseitig jeweils einen Bremsbelag aufweist. Von Vorteil ist dabei, dass bei Stromausfall die erste Bremse automatisch einfällt. Im Übrigen ist die erste Bremse elektromagnetisch betätigbar und daher von einer Steuerelektronik einfach steuerbar.

Bei einer vorteilhaften Ausgestaltung weist die zweite Bremse einen zweiten Bremsbelagträger auf,
wobei der Bremsbelagträger eine Innenverzahnung aufweist,
wobei ein zweiter ringartiger Mitnehmer auf die Zwischenwelle aufgesteckt ist und drehfest mit der Zwischenwelle, insbesondere mittels Passfederverbindung, verbunden ist,
wobei der zweite Bremsbelagträger derart auf den zweiten Mitnehmer aufgesteckt ist, dass die Innenverzahnung mit der Außenverzahnung im Eingriff ist. so, dass der zweite Bremsbelagträger drehfest mit dem zweiten Mitnehmer verbunden ist und in axialer Richtung relativ zum zweiten Mitnehmer verschiebbar ist,
wobei ein zweiter Magnetkörper mit dem Gehäuse der zweiten Bremse verbunden ist, insbesondere fest verbunden,
insbesondere wobei der Magnetkörper und das Gehäuse der zweiten Bremse zusammen einstückig ausgeführt sind,
wobei das Gehäuse der zweiten Bremse mit dem Deckelteil des Getriebes verbunden ist,
wobei eine zweite Ankerscheibe axial zwischen dem zweiten Bremsbelagträger und dem zweiten Magnetkörper angeordnet ist,
wobei die zweite Ankerscheibe mit dem zweiten Magnetkörper drehfest verbunden ist und in axialer Richtung relativ zum zweiten Magnetkörper verschiebbar angeordnet ist,
wobei am zweiten Magnetkörper abgestützte zweite Federelemente, insbesondere in Umfangsrichtung voneinander gleichmäßig beabstandete zweite Federelemente, auf die zweite Ankerscheibe drücken,
wobei im zweiten Magnetkörper eine zweite Wicklung aufgenommen ist, insbesondere wobei im zweiten Magnetkörper eine zweite Wicklung, insbesondere Ringwicklung, in einer zweiten ringförmigen Vertiefung des zweiten Magnetkörpers aufgenommen ist und/oder stoffschlüssig verbunden ist,
wobei auf der von der zweiten Ankerscheibe abgewandten Seite des zweiten Bremsbelagträgers eine zweite Bremsfläche am Gehäuse, insbesondere an einer Innenseite des zweiten Gehäuses, der zweiten Bremse ausgebildet ist,
insbesondere wobei am zweiten Magnetkörper befestigte zweite Bolzen jeweils durch eine jeweilige Ausnehmung der zweiten Ankerscheibe ragen oder hindurchragen,
insbesondere wobei der zweite Bremsbelagträger axial beidseitig jeweils einen Bremsbelag aufweist. Von Vorteil ist dabei, dass bei Stromausfall die zweite Bremse automatisch einfällt. Im Übrigen ist die zweite Bremse elektromagnetisch betätigbar und daher von einer Steuerelektronik einfach steuerbar.

Bei einer vorteilhaften Ausgestaltung ist die erste Bremse elektromagnetisch betätigbar,
sodass bei Bestromen der ersten Wicklung die Ankerscheibe entgegen der von den ersten Federelementen erzeugten Federkraft zum ersten Magnetkörper hingezogen wird und bei Nichtbestromen der ersten Wicklung die ersten Federelemente die Ankerscheibe zum ersten Bremsbelagträger hindrücken, der somit auf die erste Bremsfläche gedrückt ist. Von Vorteil ist dabei, dass bei Stromausfall die erste Bremse automatisch einfällt. Im Übrigen ist die erste Bremse elektromagnetisch betätigbar und daher von einer Steuerelektronik einfach steuerbar.

Bei einer vorteilhaften Ausgestaltung ist die zweite Bremse elektromagnetisch betätigbar,
sodass bei Bestromen der zweiten Wicklung die Ankerscheibe entgegen der von den zweiten Federelementen erzeugten Federkraft zum zweiten Magnetkörper hingezogen wird und bei Nichtbestromen der zweiten Wicklung die zweiten Federelemente die Ankerscheibe zum zweiten Bremsbelagträger hindrücken, der somit auf die zweite Bremsfläche gedrückt ist. Von Vorteil ist dabei, dass bei Stromausfall die zweite Bremse automatisch einfällt. Im Übrigen ist die zweite Bremse elektromagnetisch betätigbar und daher von einer Steuerelektronik einfach steuerbar.

Bei einer vorteilhaften Ausgestaltung ist
- an der Außenseite des Getriebes, insbesondere am Deckelteil,
   oder
- an der Außenseite des Deckelteils

eine ebene Fläche ausgebildet, die als Kreisring ausgeführt ist und in welche Axialbohrungen eingebracht sind,
insbesondere in welche Schrauben eingeschraubt sind, deren Schraubenköpfe das Gehäuse der ersten Bremse an das Deckelteil andrücken. Von Vorteil ist dabei, dass die erste Fläche hochpräzise zur Lageraufnahme des zweiten Lagers herstellbar ist, insbesondere in einer einzigen Aufspannung in einer Werkzeugmaschine. Die Fläche ist eben geschliffen ausführbar und somit zum präzisen Anlegen des Gehäuses der ersten Bremse geeignet, die somit ebenfalls präzise ausrichtbar ist.

Wichtige Merkmale bei dem System mit Steuerelektronik und Getriebemotor sind, dass die Steuerelektronik mit der ersten Bremse mittels einer ersten elektrischen Signalleitung verbunden ist,
wobei die Steuerelektronik mit der zweiten Bremse mittels einer zweiten elektrischen Signalleitung verbunden ist,
insbesondere wobei die Steuerelektronik derart geeignet ausgeführt ist, dass die Drehzahl der Rotorwelle nach Aktivierung der ersten Bremse bei gelüfteter zweiter Bremse auf ein Absinken überwacht wird und bei einem unzulässig geringen Absinken oder bei konstanter Drehzahl oder bei ansteigender Drehzahl die erste Bremse zusätzlich aktiviert wird,
insbesondere wobei die Steuerelektronik in einem Umrichter angeordnet ist, welcher den Elektromotor elektrisch speist. Von Vorteil ist dabei, dass die Sicherheit erhöht ist, da bei Versagen der ersten Bremse noch die zweite Bremse zur Verfügung steht. Dabei ist auch wichtig, dass die erste Bremse auch bei Versagen der ersten Getriebestufe noch wirksam ist.

Die Zwischenwelle weist einen Achsversatz auf zur eintreibenden, also antreibenden, Welle des Getriebes und zur abtreibenden, also austreibenden, Welle des Getriebes.

Bei einer vorteilhaften Ausgestaltung sind ein Mittel zur Erfassung des Motorstroms des Elektromotors und ein Mittel zur Bestimmung der Motorspannung des Elektromotors mit der Steuerelektronik verbunden,

insbesondere wobei die Steuerelektronik geeignet ausgeführt ist, aus den erfassten Werten des Motorstroms und der Motorspannung einen Wert des vom Elektromotor an das Getriebe über die Rotorwelle abgegebenen Drehmoments zu bestimmen. Von Vorteil ist dabei, dass die Drehzahl aus den erfassten Werten auch ohne Sensor bestimmbar ist. Alternativ oder zusätzlich ist aber auch ein Mittel, insbesondere Sensor, zur Drehzahlbestimmung im Motor anordenbar und mit der Steuerelektronik verbindbar.

Weitere Vorteile ergeben sich aus den Unteransprüchen.

Die Erfindung wird nun anhand von schematischen Abbildungen näher erläutert:

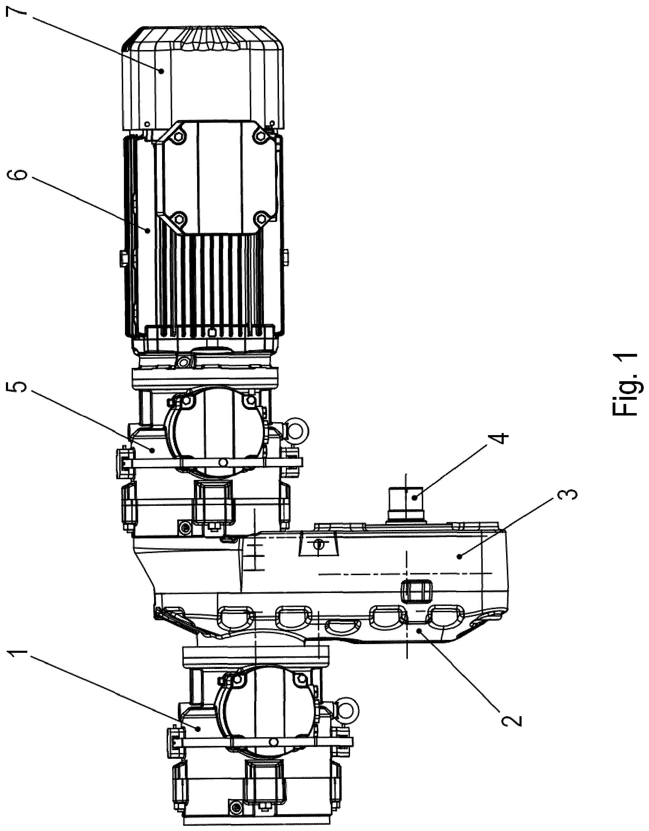

In der Figur 1 ist ein erfindungsgemäßer Getriebemotor in Seitenansicht dargestellt.

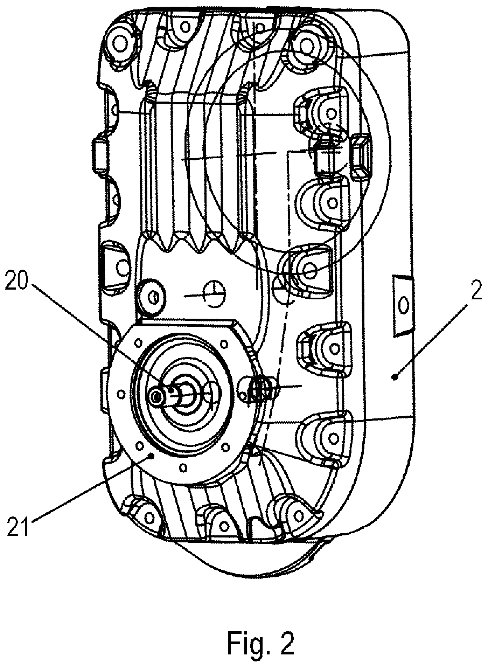

In der Figur 2 ist ein Deckelteil 2 des Getriebemotors in Schrägansicht dargestellt.

Wie in den Figuren dargestellt, weist der Getriebemotor einen Elektromotor 6 auf, der über eine zwischengeordnete zweite Bremse 5 mit dem Getriebe des Getriebemotors verbunden ist.

Auf der von der zweiten Bremse 5 abgewandten Seite des Getriebes ist eine erste Bremse 1 angeordnet und mit dem Getriebe verbunden.

Insbesondere weist der Elektromotor 6 auf seiner von der zweiten Bremse 5 abgewandten Seite eine Lüfterhaube 7 auf, welche einen mit der Rotorwelle des Elektromotors 6 drehfest verbundenen Lüfter umgibt. Der Lüfter weist Lüfterflügel auf, so dass der Lüfter bei Drehung der Rotorwelle einen Luftstrom fördert, der am Gehäuse des Elektromotors entlangströmt.

Das Gehäuse des Getriebes weist ein Unterteil 3 auf, auf welches ein Deckelteil 2 aufgesetzt ist und mit dem Unterteil 3 verbunden ist.

Die Rotorwelle des Elektromotors 6 ragt durch das Unterteil 3 in den Innenraum des Getriebes hinein und ist dort drehfest mit einem Verzahnungsteil oder Ritzel verbunden, welches mit einem Zahnrad im Eingriff ist, das mit einer Zwischenwelle 20 drehfest verbunden ist.

Die zwischenwelle 20 ist mittels im Gehäuse des Getriebes aufgenommenen Lagern drehbar gelagert. Insbesondere ist hierzu ein erstes Lager im Unterteil 3 und ein zweites Lager im Deckelteil 2 aufgenommen, wobei der Innenring des ersten Lagers auf die Zwischenwelle 20 aufgesteckt ist und der Innenring des zweiten Lagers auch auf die Zwischenwelle aufgesteckt ist.

Vorzugsweise ist die Rotorwelle nicht nur im Elektromotor 6 drehbar gelagert, sondern auch mittels eines im Unterteil 3 aufgenommenen Lagers.

Die Drehzahl der Zwischenwelle 20 ist geringer als die Drehzahl der Rotorwelle. Insbesondere ist das Übersetzungsverhältnis der ersten Getriebestufe, welche aus dem mit der Zwischenwelle verbundenen Zahnrad und dem mit der Rotorwelle drehfest verbundenen Ritzel oder Zahnrad ausgebildet ist, größer als Eins.

Die Zwischenwelle 20 ist mit einem weiteren Zahnrad drehfest verbunden, das mit einem mit der abtreibenden Welle 4 drehfest verbundenen Zahnrad im Eingriff ist.

Die Drehachse der Zwischenwelle 20 ist zwar parallel zur Drehachse der Rotorwelle ausgerichtet, wobei allerdings der Abstand zwischen der Drehachse der Zwischenwelle 20 und der Drehachse der Rotorwelle nicht verschwindet, also endlich ist.

Die zweite Bremse 5 weist ein Gehäuse auf, das einerseits sowohl mit einem Gehäuseteil, insbesondere Flanschteil, des Elektromotors 6 verbunden ist und andererseits mit dem Unterteil 3 des Getriebes.

Die erste Bremse 1 weist ein Gehäuse auf, das mit dem Deckelteil 2 des Getriebes verbunden ist.

Die zweite Bremse 5 weist einen insbesondere scheibenartigen Bremsbelagträger auf, welcher eine Innenverzahnung aufweist. Der Bremsbelagträger ist auf einen ringförmigen Mitnehmer aufgesteckt, welcher eine Außenverzahnung aufweist. Die Innenverzahnung ist mit der Außenverzahnung im Eingriff. Der Mitnehmer ist auf die Rotorwelle aufgesteckt und drehfest mit der Rotorwelle verbunden, insbesondere mittels Passfederverbindung.

Somit ist der Bremsbelagträger mit der Rotorwelle drehfest verbunden und in axialer Richtung, insbesondere also parallel zur Drehachse der Rotorwelle, verschiebbar angeordnet.

Die zweite Bremse 5 weist eine Bremsfläche auf, die mit dem Gehäuse der Bremse fest verbunden ist.

Auf der von der Bremsfläche axial, insbesondere also in axialer Richtung, abgewandten Seite des vorzugsweise axial beidseitig mit Bremsbelägen bestückten Bremsbelagträgers ist eine Ankerscheibe angeordnet, welche mit einem Magnetkörper drehfest verbunden ist und axial verschiebbar angeordnet ist. Hierzu sind im Magnetkörper Bolzen befestigt, welche durch Ausnehmungen der Ankerscheibe hindurchragen.

Der Magnetkörper ist auf der von der Bremsfläche abgewandten Seite des Bremsbelagträgers angeordnet. Die Ankerscheibe ist axial zwischen dem Magnetkörper angeordnet. Der Bremsbelagträger ist axial zwischen der Ankerscheibe und der Bremsfläche angeordnet.

Im Magnetkörper ist eine ringförmige Vertiefung ausgebildet, in welcher eine bestrombare Ringwicklung aufgenommen und stoffschlüssige mit dem Magnetkörper verbunden ist. Die Ringachse der Ringwicklung ist koaxial zur Drehachse der Rotorwelle ausgerichtet.

Der Magnetkörper ist mit dem Gehäuse der zweiten Bremse 5 verbunden oder drehfest verbunden oder alternativ einstückig, insbesondere einteilig, ausgeführt.

Die Bremse ist somit als elektromagnetisch betätigbare Bremse ausgeführt. Bei Bestromung der Ringwicklung mit einem unipolaren Strom wird die Ankerscheibe zum Magnetkörper hin gezogen entgegen der von am Magnetkörper abgestützen und auf die Ankerscheibe drückenden Federkraft. Insbesondere ist somit die Bremse gelüftet, also der Bremsbelagträger frei drehbar mit der Rotorwelle zusammen.

Bei Nichtbestromung drücken die Federelemente die Ankerscheibe vom Magnetkörper weg zum Bremsbelagträger hin, der somit gegen die Bremsfläche gedrückt wird. Insbesondere ist somit die Bremse eingefallen.

Die erste Bremse 1 weist ebenfalls eine Bremsfläche auf, die mit dem Gehäuse der ersten Bremse 1 fest verbunden ist.

Auf der von der Bremsfläche der ersten Bremse 1 axial, insbesondere also in axialer Richtung, abgewandten Seite des vorzugsweise axial beidseitig mit Bremsbelägen bestückten Bremsbelagträgers der ersten Bremse 1 ist eine Ankerscheibe der ersten Bremse 1 angeordnet, welche mit einem Magnetkörper der ersten Bremse 1 drehfest verbunden ist und axial verschiebbar angeordnet ist. Hierzu sind im Magnetkörper der ersten Bremse 1 Bolzen befestigt, welche durch Ausnehmungen der Ankerscheibe der ersten Bremse 1 hindurchragen.

Der Magnetkörper der ersten Bremse 1 ist auf der von der Bremsfläche der ersten Bremse 1 abgewandten Seite des Bremsbelagträgers der ersten Bremse 1 angeordnet. Die Ankerscheibe der ersten Bremse 1 ist axial zwischen dem Magnetkörper der ersten Bremse 1 angeordnet. Der Bremsbelagträger der ersten Bremse 1 ist axial zwischen der Ankerscheibe der ersten Bremse 1 und der Bremsfläche der ersten Bremse 1 angeordnet.

Im Magnetkörper der ersten Bremse 1 ist eine ringförmige Vertiefung ausgebildet, in welcher eine bestrombare Ringwicklung der ersten Bremse 1 aufgenommen und stoffschlüssige mit dem Magnetkörper der ersten Bremse 1 verbunden ist. Die Ringachse der Ringwicklung der ersten Bremse 1 ist koaxial zur Drehachse der Zwischenwelle 20 ausgerichtet.

Der Magnetkörper der ersten Bremse 1 ist mit dem Gehäuse der ersten Bremse 1 verbunden oder drehfest verbunden oder alternativ einstückig, insbesondere einteilig, ausgeführt.

Die erste Bremse 1 ist somit als elektromagnetisch betätigbare Bremse ausgeführt. Bei Bestromung der Ringwicklung der ersten Bremse 1 mit einem unipolaren Strom wird die Ankerscheibe der ersten Bremse 1 zum Magnetkörper der ersten Bremse 1 hin gezogen entgegen der von am Magnetkörper der ersten Bremse 1 abgestützen und auf die Ankerscheibe der ersten Bremse 1 drückenden Federkraft. Insbesondere ist somit die erste Bremse 1 gelüftet, also der Bremsbelagträger der ersten Bremse 1 frei drehbar mit der Rotorwelle der ersten Bremse 1 zusammen.

Federelemente der ersten Bremse 1 drücken auf die Ankerscheibe der ersten Bremse 1 und sind am Magnetkörper der ersten Bremse 1 abgestützt.

Bei Nichtbestromung drücken die Federelemente der ersten Bremse 1 die Ankerscheibe der ersten Bremse 1 vom Magnetkörper der ersten Bremse 1 weg zum Bremsbelagträger der ersten Bremse 1 hin, der somit gegen die Bremsfläche der ersten Bremse 1 gedrückt wird. Insbesondere ist somit die erste Bremse 1 dann eingefallen.

Vorzugsweise sind die erste Bremse 1, die zweite Bremse 5, der Elektromotor 6 und/oder das Getriebe explosionsgeschützt ausgeführt.

Zum Anbau der ersten Bremse 1 weist das Deckelteil 2 des Getriebes eine ebene Fläche auf, in welcher Axialbohrungen eingebracht sind zum Einschrauben von Schrauben, deren Schraubenköpfe das Gehäuse der ersten Bremse 1 an das Deckelteil 2 andrücken. Darüber hinaus ist die ebene Fläche fein bearbeitet, insbesondere geschliffen. Eine zwischen dem Gehäuse der ersten Bremse 1 und der ebenen Fläche angeordnete Flachdichtung dichtet die erste Bremse 1 zum Getriebe hin ab.

Die ebene Fläche ist als Kreisring ausgeführt, insbesondere wobei die Bohrungen in den Kreisring eingebracht sind.

Der Elektromotor wird von einem Umrichter gespeist, der eine Steuerelektronik aufweist, welche die Drehzahl der Rotorwelle bestimmt. Diese Bestimmung ist mit einem Sensor ausführbar, der im Elektromotor 6 angeordnet ist. Alternativ oder zusätzlich ist die Bestimmung der Drehzahl aus den erfassten Werten des Motorstroms und der Motorspannung bestimmbar, indem gemäß einem Modell aus den ermittelten Verläufen des Motorstroms und der Motorspannung die Drehzahl der Rotorwelle geschätzt und/oder bestimmt wird.

Bei Aktivieren eines Abbremsvorgangs wird zunächst von der Steuerelektronik mittels eines Steuersignals die erste Bremse 1 aktiviert, während die zweite Bremse 5 noch gelüftet bleibt. Durch Überwachen der Drehzahl der Rotorwelle mittels der Steuerelektronik ist dann die Bremswirkung überprüfbar, also ein Reduzieren der Drehzahl.

Ist jedoch keine Reduzierung der Drehzahl von der Steuerelektronik erkennbar, wird von einem Versagen der ersten Bremse 1 ausgegangen und daher auch eine Aktivierung der zweiten Bremse 5 ausgeführt, die dann die Rotorwelle direkter als die erste Bremse 1 abbremst. Somit ist eine erhöhte Sicherheit erreicht. Durch die explosionsgeschützte Ausführung der Bremsen 1 und 5 ist aber auch eine erhöhte Sicherheit weiter unterstützt.

Bei weiteren erfindungsgemäßen Ausführungsbeispielen weist das Getriebe noch weitere Getriebestufen auf und/oder ist die Rotorwelle nicht einstückig, sondern mehrstückig, insbesondere zweistückig, ausgeführt, insbesondere wobei die mehreren, insbesondere zwei, Stücke axial hintereinander angeordnet sind.

### Bezugszeichenliste

1 erste Bremse
2 Deckelteil
3 Unterteil
4 abtreibende Welle
5 zweite Bremse
6 Elektromotor
7 Lüfterhaube
20 Zwischenwelle
21 Verbindungsbereich

## Patentansprüche

1. Getriebemotor,
aufweisend ein Getriebe und einen Elektromotor (6),
wobei die Rotorwelle des Elektromotors (6) mit einem ersten Verzahnungsteil, insbesondere Ritzel oder Zahnrad, des Getriebes drehfest verbunden ist,
wobei das erste Verzahnungsteil mit einem zweiten Verzahnungsteil kämmt und/oder im Eingriff ist,
wobei das zweite Verzahnungsteil mit einer Zwischenwelle (20) drehfest verbunden ist, welche mittels eines ersten Lagers und eines zweiten Lagers im Getriebe drehbar gelagert ist,
**dadurch gekennzeichnet, dass**
eine erste Bremse (1) zum Abbremsen der Zwischenwelle (20) auf der vom Elektromotor (6) abgewandten Seite des Getriebes angeordnet ist,
**wobei die abtreibende Welle (4) des Getriebes von der Zwischenwelle (20) und von der Rotorwelle beabstandet ist,**
**wobei die erste Bremse (1) auf die Zwischenwelle (20) wirkt, deren Drehzahl entsprechend der Übersetzung der ersten Getriebestufe des Getriebes heruntergesetzt ist,**
wobei zwischen dem Elektromotor (6) und dem Getriebe eine zweite Bremse (5) zum Abbremsen der Rotorwelle angeordnet ist,
**wobei der Getriebemotor derart ausgeführt ist, dass, während die zweite Bremse (5) gelüftet ist, die erste Bremse (1) einen Aktivierungsbefehl erhält und nach Erkennen des Versagens der ersten Bremse (1) die zweite Bremse (5) aktiviert wird.**

2. Getriebemotor nach Anspruch 1,
**dadurch gekennzeichnet, dass**
das Gehäuse des Getriebes ein Unterteil (3) und mit dem Unterteil (3) verbundenes Deckelteil (2) aufweist,
insbesondere wobei eine Flachdichtung zwischen Unterteil (3) und Deckelteil (2) angeordnet ist,
insbesondere wobei das Getriebe explosionsgeschützt ausgeführt ist.

3. Getriebemotor nach einem der vorangegangenen Ansprüche,
**dadurch gekennzeichnet, dass**
das erste Lager im Unterteil (3) und das zweite Lager im Deckelteil (2) aufgenommen ist,
wobei der Innenring des ersten Lagers auf die Zwischenwelle (20) aufgesteckt ist und der Innenring des zweiten Lagers auch auf die Zwischenwelle (20) aufgesteckt ist.

4. Getriebemotor nach einem der vorangegangenen Ansprüche,
**dadurch gekennzeichnet, dass**
**die Zwischenwelle (20) parallel zur Rotorwelle ausgerichtet ist,**
insbesondere wobei die Zwischenwelle (20) parallel zur abtreibenden Welle (4) ausgerichtet ist.

5. Getriebemotor nach einem der vorangegangenen Ansprüche,
**dadurch gekennzeichnet, dass**
die einzige durch das Deckelteil (2) hindurchragende Welle die Zwischenwelle (20) ist
und/oder dass
die durch das Deckelteil (2) hindurchragende Welle einen nicht verschwindenden Achsversatz zur eintreibenden Welle des Getriebes aufweist und einen nicht verschwindenden Achsversatz zur abtreibenden Welle (4) des Getriebes aufweist.

6. Getriebemotor nach einem der vorangegangenen Ansprüche,
**dadurch gekennzeichnet, dass**
ein Verzahnungsteil drehfest mit der abtreibenden Welle (4) verbunden ist, das im Eingriff ist mit einem mit der Zwischenwelle (20) drehfest verbundenen Zahnrad.

7. Getriebemotor nach einem der vorangegangenen Ansprüche,
**dadurch gekennzeichnet, dass**
das Gehäuse der ersten Bremse (1) mit dem Deckelteil (2) verbunden ist,
und/oder dass
das Gehäuse der zweiten Bremse (5) einerseits mit dem Unterteil (3) und andererseits mit einem Gehäuseteil, insbesondere Flanschteil, des Elektromotors (6), verbunden ist.

8. Getriebemotor nach einem der vorangegangenen Ansprüche,
**dadurch gekennzeichnet, dass**
auf der von der zweiten Bremse (5) axial abgewandten Seite des Elektromotors (6) eine Lüfterhaube (7) am Gehäuse des Elektromotors (6) befestigt ist,
wobei die Lüfterhaube (7) einen drehfest mit der Rotorwelle verbundenen Lüfter umgibt.

9. Getriebemotor nach einem der vorangegangenen Ansprüche,
**dadurch gekennzeichnet, dass**
die erste Bremse (1) einen ersten Bremsbelagträger aufweist,
wobei der Bremsbelagträger eine Innenverzahnung aufweist,
wobei ein erster ringartiger Mitnehmer auf die Zwischenwelle (20) aufgesteckt ist und drehfest mit der Zwischenwelle (20), insbesondere mittels Passfederverbindung, verbunden ist,
wobei der erste Bremsbelagträger derart auf den ersten Mitnehmer aufgesteckt ist, dass die Innenverzahnung mit der Außenverzahnung im Eingriff ist. so, dass der erste Bremsbelagträger drehfest mit dem ersten Mitnehmer verbunden ist und in axialer Richtung relativ zum ersten Mitnehmer verschiebbar ist,
wobei ein erster Magnetkörper mit dem Gehäuse der ersten Bremse (1) verbunden ist, insbesondere fest verbunden,
insbesondere wobei der Magnetkörper und das Gehäuse der ersten Bremse (1) zusammen einstückig ausgeführt sind,
wobei das Gehäuse der ersten Bremse (1) mit dem Deckelteil (2) des Getriebes verbunden ist,
wobei eine erste Ankerscheibe axial zwischen dem ersten Bremsbelagträger und dem ersten Magnetkörper angeordnet ist,
wobei die erste Ankerscheibe mit dem ersten Magnetkörper drehfest verbunden ist und in axialer Richtung relativ zum ersten Magnetkörper verschiebbar angeordnet ist,
wobei am ersten Magnetkörper abgestützte erste Federelemente, insbesondere in Umfangsrichtung voneinander gleichmäßig beabstandete erste Federelemente, auf die erste Ankerscheibe drücken,
wobei im ersten Magnetkörper eine erste Wicklung aufgenommen ist, insbesondere wobei im ersten Magnetkörper eine erste Wicklung, insbesondere Ringwicklung, in einer ersten ringförmigen Vertiefung des ersten Magnetkörpers aufgenommen ist und/oder stoffschlüssig verbunden ist,
wobei auf der von der ersten Ankerscheibe abgewandten Seite des ersten Bremsbelagträgers eine erste Bremsfläche am Gehäuse, insbesondere an einer Innenseite des ersten Gehäuses, der ersten Bremse (1) ausgebildet ist,
insbesondere wobei am ersten Magnetkörper befestigte erste Bolzen jeweils durch eine jeweilige Ausnehmung der ersten Ankerscheibe ragen oder hindurchragen,
insbesondere wobei der erste Bremsbelagträger axial beidseitig jeweils einen Bremsbelag aufweist.

10. Getriebemotor nach einem der vorangegangenen Ansprüche,
**dadurch gekennzeichnet, dass**
die zweite Bremse (5) einen zweiten Bremsbelagträger aufweist,
wobei der Bremsbelagträger eine Innenverzahnung aufweist,
wobei ein zweiter ringartiger Mitnehmer auf die Zwischenwelle (20) aufgesteckt ist und drehfest mit der Zwischenwelle (20), insbesondere mittels Passfederverbindung, verbunden ist,
wobei der zweite Bremsbelagträger derart auf den zweiten Mitnehmer aufgesteckt ist, dass die Innenverzahnung mit der Außenverzahnung im Eingriff ist. so dass der zweite Bremsbelagträger drehfest mit dem zweiten Mitnehmer verbunden ist und in axialer Richtung relativ zum zweiten Mitnehmer verschiebbar ist,
wobei ein zweiter Magnetkörper mit dem Gehäuse der zweiten Bremse (5) verbunden ist, insbesondere fest verbunden,
insbesondere wobei der Magnetkörper und das Gehäuse der zweiten Bremse (5) zusammen einstückig ausgeführt sind,
wobei das Gehäuse der zweiten Bremse (5) mit dem Deckelteil (2) des Getriebes verbunden ist,
wobei eine zweite Ankerscheibe axial zwischen dem zweiten Bremsbelagträger und dem zweiten Magnetkörper angeordnet ist,
wobei die zweite Ankerscheibe mit dem zweiten Magnetkörper drehfest verbunden ist und in axialer Richtung relativ zum zweiten Magnetkörper verschiebbar angeordnet ist,
wobei am zweiten Magnetkörper abgestützte zweite Federelemente, insbesondere in Umfangsrichtung voneinander gleichmäßig beabstandete zweite Federelemente, auf die zweite Ankerscheibe drücken,
wobei im zweiten Magnetkörper eine zweite Wicklung aufgenommen ist, insbesondere wobei im zweiten Magnetkörper eine zweite Wicklung, insbesondere Ringwicklung, in einer zweiten ringförmigen Vertiefung des zweiten Magnetkörpers aufgenommen ist und/oder stoffschlüssig verbunden ist,
wobei auf der von der zweiten Ankerscheibe abgewandten Seite des zweiten Bremsbelagträgers eine zweite Bremsfläche am Gehäuse, insbesondere an einer Innenseite des zweiten Gehäuses, der zweiten Bremse (5) ausgebildet ist,
insbesondere wobei am zweiten Magnetkörper befestigte zweite Bolzen jeweils durch eine jeweilige Ausnehmung der zweiten Ankerscheibe ragen oder hindurchragen,
insbesondere wobei der zweite Bremsbelagträger axial beidseitig jeweils einen Bremsbelag aufweist.

11. Getriebemotor nach einem der vorangegangenen Ansprüche,
**dadurch gekennzeichnet, dass**
die erste Bremse (1) elektromagnetisch betätigbar ist,
sodass bei Bestromen der ersten Wicklung die Ankerscheibe entgegen der von den ersten Federelementen erzeugten Federkraft zum ersten Magnetkörper hingezogen wird und bei Nichtbestromen der ersten Wicklung die ersten Federelemente die Ankerscheibe zum ersten Bremsbelagträger hindrücken, der somit auf die erste Bremsfläche gedrückt wird oder ist.

12. Getriebemotor nach einem der vorangegangenen Ansprüche,
**dadurch gekennzeichnet, dass**
die zweite Bremse (5) elektromagnetisch betätigbar ist,
sodass bei Bestromen der zweiten Wicklung die Ankerscheibe entgegen der von den zweiten Federelementen erzeugten Federkraft zum zweiten Magnetkörper hingezogen wird und bei Nichtbestromen der zweiten Wicklung die zweiten Federelemente die Ankerscheibe zum zweiten Bremsbelagträger hindrücken, der somit auf die zweite Bremsfläche gedrückt wird oder ist.

13. Getriebemotor nach einem der vorangegangenen Ansprüche,
**dadurch gekennzeichnet, dass**
- an der Außenseite des Getriebes, insbesondere am Deckelteil (2), oder
- an der Außenseite des Deckelteils (2)
eine ebene Fläche ausgebildet ist, die als Kreisring ausgeführt ist und in welche Axialbohrungen eingebracht sind,
insbesondere in welche Schrauben eingeschraubt sind, deren Schraubenköpfe das Gehäuse der ersten Bremse (1) an das Deckelteil (2) andrücken.

14. System mit Steuerelektronik und Getriebemotor nach einem der vorangegangenen Ansprüche,
**dadurch gekennzeichnet, dass**
die Steuerelektronik mit der ersten Bremse (1) mittels einer ersten elektrischen Signalleitung verbunden ist,
wobei die Steuerelektronik mit der zweiten Bremse (5) mittels einer zweiten elektrischen Signalleitung verbunden ist,
insbesondere wobei die Steuerelektronik derart geeignet ausgeführt ist, dass die Drehzahl der Rotorwelle nach Aktivierung der ersten Bremse (1) bei gelüfteter zweiter Bremse (5) auf ein Absinken überwacht wird und bei einem unzulässig geringen Absinken oder bei konstanter Drehzahl oder bei ansteigender Drehzahl die erste Bremse (1) zusätzlich aktiviert wird,
insbesondere wobei die Steuerelektronik in einem Umrichter angeordnet ist, welcher den Elektromotor (6) elektrisch speist.

15. System nach einem der vorangegangenen Ansprüche,
**dadurch gekennzeichnet, dass**
ein Mittel zur Erfassung des Motorstroms des Elektromotors (6) und ein Mittel zur Bestimmung der Motorspannung des Elektromotors (6) mit der Steuerelektronik verbunden sind,
insbesondere wobei die Steuerelektronik geeignet ausgeführt ist, aus den erfassten Werten des Motorstroms und der Motorspannung einen Wert des vom Elektromotor (6) an das Getriebe über die Rotorwelle abgegebenen Drehmoments zu bestimmen.

## Claims

1. A geared motor,
having a gear unit and an electric motor (6),
wherein the rotor shaft of the electric motor (6) is connected non-rotatably to a first gearing part, in particular pinion or gear wheel, of the gear unit,
wherein the first gearing part meshes and/or is engaged with a second gearing part, wherein the second gearing part is connected non-rotatably to an intermediate shaft (20) which is rotatably mounted in the gear unit by means of a first bearing and a second bearing,
**characterised in that**
a first brake (1) for braking the intermediate shaft (20) is arranged on that side of the gear unit which faces away from the electric motor (6),
with the output shaft (4) of the gear unit being spaced apart from the intermediate shaft (20) and from the rotor shaft,
with the first brake (1) acting on the intermediate shaft (20), the rotational speed of which is reduced corresponding to the gear ratio of the first gear stage of the gear unit,
with a second brake (5) for braking the rotor shaft being arranged between the electric motor (6) and the gear unit,
with the geared motor being embodied in such a way that, while the second brake (5) is released, the first brake (1) receives an activation command and once the failure of the first brake (1) has been recognised the second brake (5) is activated.

2. A geared motor according to claim 1,
**characterised in that**
the housing of the gear unit has a lower part (3) and a cover part (2) connected to the lower part (3),
in particular with a flat seal being arranged between the lower part (3) and cover part (2),
in particular with the gear unit being made explosion-proof.

3. A geared motor according to one of the preceding claims,
**characterised in that**
the first bearing is received in the lower part (3) and the second bearing in the cover part (2),
with the inner ring of the first bearing being mounted on the intermediate shaft (20) and the inner ring of the second bearing also being mounted on the intermediate shaft (20).

4. A geared motor according to one of the preceding claims,
**characterised in that**
the intermediate shaft (20) is oriented parallel to the rotor shaft,
in particular with the intermediate shaft (20) being oriented parallel to the output shaft (4).

5. A geared motor according to one of the preceding claims,
**characterised in that**
the sole shaft which protrudes through the cover part (2) is the intermediate shaft (20)
and/or **in that**
the shaft which protrudes through the cover part (2) has a non-vanishing axial offset to the input shaft of the gear unit and has a non-vanishing axial offset to the output shaft (4) of the gear unit.

6. A geared motor according to one of the preceding claims,
**characterised in that**
a gearing part is connected non-rotatably to the output shaft (4), and is engaged with a gear wheel connected non-rotatably to the intermediate shaft (20).

7. A geared motor according to one of the preceding claims,
**characterised in that**
the housing of the first brake (1) is connected to the cover part (2),
and/or **in that**
the housing of the second brake (5) is connected on one hand to the lower part (3) and on the other hand to a housing part, in particular flange part, of the electric motor (6).

8. A geared motor according to one of the preceding claims,
**characterised in that**
on that side of the electric motor (6) which faces away axially from the second brake (5), a fan cowl (7) is fastened to the housing of the electric motor (6),
with the fan cowl (7) surrounding a fan connected non-rotatably to the rotor shaft.

9. A geared motor according to one of the preceding claims,
**characterised in that**
the first brake (1) has a first brake lining carrier,
with the brake lining carrier having internal gearing,
with a first ring-like driving element being mounted on the intermediate shaft (20) and being connected non-rotatably to the intermediate shaft (20), in particular by means of a feather-key connection,
with the first brake lining carrier being mounted on the first driving element in such a way that the internal gearing is engaged with the external gearing, such that the first brake lining carrier is connected non-rotatably to the first driving element and is displaceable in the axial direction relative to the first driving element,
with a first magnet body being connected, in particular firmly connected, to the housing of the first brake (1),
in particular with the magnet body and the housing of the first brake (1) together being formed in one piece,
with the housing of the first brake (1) being connected to the cover part (2) of the gear unit,
with a first armature disc being arranged axially between the first brake lining carrier and the first magnet body,
with the first armature disc being connected non-rotatably to the first magnet body and being arranged displaceably in the axial direction relative to the first magnet body,
with first spring elements supported on the first magnet body, in particular first spring elements uniformly spaced apart from each other in the circumferential direction, pressing on the first armature disc,
with a first winding being received in the first magnet body, in particular with a first winding, in particular ring winding, being received and/or being connected by a material-formed bond in a first annular indentation of the first magnet body in the first magnet body,
with a first braking face being formed on the housing, in particular on an inner side of the first housing, of the first brake (1) on that side of the first brake lining carrier which faces away from the first armature disc,
in particular with first bolts which are fastened to the first magnet body protruding in each case through a respective cutout in the first armature disc,
in particular with the first brake lining carrier having one brake lining in each case axially on either side.

10. A geared motor according to one of the preceding claims,
**characterised in that**
the second brake (5) has a second brake lining carrier,
with the brake lining carrier having internal gearing,
with a second ring-like driving element being mounted on the intermediate shaft (20) and being connected non-rotatably to the intermediate shaft (20), in particular by means of a feather-key connection,
with the second brake lining carrier being mounted on the second driving element in such a way that the internal gearing is engaged with the external gearing, such that the second brake lining carrier is connected non-rotatably to the second driving element and is displaceable in the axial direction relative to the second driving element,
with a second magnet body being connected, in particular firmly connected, to the housing of the second brake (5),
in particular with the magnet body and the housing of the second brake (5) together being formed in one piece,
with the housing of the second brake (5) being connected to the cover part (2) of the gear unit,
with a second armature disc being arranged axially between the second brake lining carrier and the second magnet body,
with the second armature disc being connected non-rotatably to the second magnet body and being arranged displaceably in the axial direction relative to the second magnet body,
with second spring elements supported on the second magnet body, in particular second spring elements uniformly spaced apart from each other in the circumferential direction, pressing on the second armature disc,
with a second winding being received in the second magnet body, in particular with a second winding, in particular ring winding, being received and/or connected by a material-formed bond in a second annular indentation of the second magnet body in the second magnet body,
with a second braking face being formed on the housing, in particular on an inner side of the second housing, of the second brake (5) on that side of the second brake lining carrier which faces away from the second armature disc,
in particular with second bolts which are fastened to the second magnet body protruding in each case through a respective cutout in the second armature disc,
in particular with the second brake lining carrier having one brake lining in each case axially on either side.

11. A geared motor according to one of the preceding claims,
**characterised in that**
the first brake (1) is electromagnetically actuatable,
so that when the first winding is energised the armature disc is drawn towards the first magnet body counter to the spring force generated by the first spring elements, and when the first winding is not energised the first spring elements press the armature disc towards the first brake lining carrier, which thus becomes or is pressed onto the first braking face.

12. A geared motor according to one of the preceding claims,
**characterised in that**
the second brake (5) is electromagnetically actuatable,
so that when the second winding is energised the armature disc is drawn towards the second magnet body counter to the spring force generated by the second spring elements, and when the second winding is not energised the second spring elements press the armature disc towards the second brake lining carrier, which thus becomes or is pressed onto the second braking face.

13. A geared motor according to one of the preceding claims,
**characterised in that**
- on the outer side of the gear unit, in particular on the cover part (2), or
- on the outer side of the cover part (2)
there is formed a flat face which is embodied as a circular ring and in which axial bores are formed,
in particular into which are screwed screws, the screw heads of which press the housing of the first brake (1) against the cover part (2).

14. A system with control electronics and a geared motor according to one of the preceding claims,
**characterised in that**
the control electronics are connected to the first brake (1) by means of a first electric signal line,
with the control electronics being connected to the second brake (5) by means of a second electric signal line,
in particular with the control electronics being embodied suitably in such a way that the rotational speed of the rotor shaft, once the first brake (1) has been activated, when the second brake (5) is released, is monitored for any decrease and if there is an impermissibly small decrease or if the rotational speed is constant or if the rotational speed increases the first brake (1) is additionally activated,
in particular with the control electronics being arranged in an inverter which electrically supplies the electric motor (6).

15. A system according to one of the preceding claims,
**characterised in that**
a means for detecting the motor current of the electric motor (6) and a means for determining the motor voltage of the electric motor (6) are connected to the control electronics,
in particular with the control electronics being embodied suitably to determine from the detected values of the motor current and the motor voltage a value of the torque delivered by the electric motor (6) to the gear unit by way of the rotor shaft.

## Revendications

1. Motor-réducteur,
comprenant un réducteur et un moteur électrique (6),
l' arbre de rotor du moteur électrique (6) étant relié de manière solidaire en rotation à un premier élément denté, en particulier pignon ou roue dentée, du réducteur,
le premier élément denté engrenant avec un deuxième élément denté et/ou étant en engagement,
le deuxième élément denté étant relié de manière solidaire en rotation à un arbre intermédiaire (20), lequel est monté de manière rotative dans le réducteur au moyen d'un premier palier et d'un deuxième palier,
**caractérisé en ce que**
un premier frein (1) pour freiner l'arbre intermédiaire (20) est disposé sur le côté opposé au moteur électrique (6) du réducteur,
l' arbre de sortie (4) du réducteur étant espacé de l'arbre intermédiaire (20) et de l'arbre de rotor, le premier frein (1) agissant sur l'arbre intermédiaire (20), dont la vitesse de rotation
est réduite conformément au rapport de réduction du premier étage de réduction du réducteur,
un deuxième frein (5) pour freiner l'arbre de rotor étant disposé entre le moteur électrique (6) et le réducteur,
le motor-réducteur étant conçu de manière appropriée de sorte que, pendant que le deuxième frein (5) est desserré, le premier frein (1) reçoit une commande d'activation et, après détection de la défaillance du premier frein (1), le deuxième frein (5) est activé.

2. Motor-réducteur selon la revendication 1,
**caractérisé en ce que**
le boîtier du réducteur comprend une partie inférieure (3) et une partie supérieure (2) reliée à la partie inférieure (3),
en particulier, un joint plat étant disposé entre la partie inférieure (3) et la partie supérieure (2),
en particulier, le réducteur étant réalisé antidéflagrant.

3. Motor-réducteur selon l'une des revendications précédentes,
**caractérisé en ce que**
le premier palier est reçu dans la partie inférieure (3) et le deuxième palier dans la partie supérieure (2),
l'anneau intérieur du premier palier étant emmanché sur l'arbre intermédiaire (20) et l'anneau intérieur du deuxième palier étant également emmanché sur l'arbre intermédiaire (20).

4. Motor-réducteur selon l'une des revendications précédentes,
**caractérisé en ce que**
l'arbre intermédiaire (20) est aligné parallèlement à l'arbre de rotor,
en particulier, l'arbre intermédiaire (20) étant aligné parallèlement à l'arbre de sortie (4).

5. Motor-réducteur selon l'une des revendications précédentes,
**caractérisé en ce que**
le seul arbre traversant la partie supérieure (2) est l'arbre intermédiaire (20) et/ou que
l'arbre traversant la partie supérieure (2) présente un décalage d'axe non nul par rapport à l'arbre d'entrée du réducteur et un décalage d'axe non nul par rapport à l'arbre de sortie (4) du réducteur.

6. Motor-réducteur selon l'une des revendications précédentes,
**caractérisé en ce que**
un élément denté est relié de manière solidaire en rotation à l'arbre de sortie (4), lequel est en engagement avec une roue dentée reliée de manière solidaire en rotation à l'arbre intermédiaire (20).

7. Motor-réducteur selon l'une des revendications précédentes,
**caractérisé en ce que**
le boîtier du premier frein (1) est relié à la partie supérieure (2),
et/ou que
le boîtier du deuxième frein (5) est d'une part relié à la partie inférieure (3) et d'autre part à une partie de boîtier, en particulier une partie de bride, du moteur électrique (6).

8. Motor-réducteur selon l'une des revendications précédentes,
**caractérisé en ce que**
sur le côté axial opposé au deuxième frein (5) du moteur électrique (6), un capot de ventilateur (7) est fixé au boîtier du moteur électrique (6),
le capot de ventilateur (7) entourant un ventilateur relié de manière solidaire en rotation à l'arbre de rotor.

9. Motor-réducteur selon l'une des revendications précédentes,
**caractérisé en ce que**
le premier frein (1) comprend un premier support de garniture de frein,
le support de garniture de frein comprenant une denture intérieure,
un premier entraînement annulaire étant emmanché sur l'arbre intermédiaire (20) et relié de manière solidaire en rotation à l'arbre intermédiaire (20), en particulier au moyen d'une liaison par clavette,
le premier support de garniture de frein étant emmanché sur le premier entraînement annulaire de telle sorte que la denture intérieure soit en engagement avec la denture extérieure, de sorte que le premier support de garniture de frein soit relié de manière solidaire en rotation au premier entraînement annulaire et soit déplaçable en direction axiale relativement au premier entraînement annulaire,
un premier corps magnétique étant relié au boîtier du premier frein (1),
en particulier fixé solidement,
en particulier, le corps magnétique et le boîtier du premier frein (1) étant réalisés en une seule pièce, le boîtier du premier frein (1) étant relié à la partie supérieure (2) du réducteur,
un premier disque d'ancrage étant disposé axialement entre le premier support de garniture de frein et le premier corps magnétique,
le premier disque d'ancrage étant relié de manière solidaire en rotation au premier corps magnétique et disposé de manière déplaçable en direction axiale relativement au premier corps magnétique,
des premiers éléments de ressort supportés sur le premier corps magnétique, en particulier des premiers éléments de ressort espacés uniformément les uns des autres en direction périphérique, appuyant sur la première disque d'ancrage,
un premier bobinage étant reçu dans le premier corps magnétique, en particulier un premier bobinage, en particulier bobinage annulaire, étant reçu dans une première cavité annulaire du premier corps magnétique et/ou relié de manière adhérente,
sur le côté opposé au premier disque d'ancrage du premier support de garniture de frein, une première surface de freinage étant formée sur le boîtier, en particulier sur une face intérieure du premier boîtier, du premier frein (1),
en particulier, des premiers boulons fixés au premier corps magnétique traversant chacun un évidement respectif du premier disque d'ancrage ou le traversant,
en particulier, le premier support de garniture de frein comportant axialement des deux côtés une garniture de frein respective.

10. Motor-réducteur selon l'une des revendications précédentes,
**caractérisé en ce que**
le deuxième frein (5) comprend un deuxième support de garniture de frein,
le support de garniture de frein comprenant une denture intérieure,
un deuxième entraînement annulaire étant emmanché sur l'arbre intermédiaire (20) et relié de manière solidaire en rotation à l'arbre intermédiaire (20), en particulier au moyen d'une liaison par clavette,
le deuxième support de garniture de frein étant emmanché sur le deuxième entraînement annulaire de telle sorte que la denture intérieure soit en engagement avec la denture extérieure, de sorte que le deuxième support de garniture de frein soit relié de manière solidaire en rotation au deuxième entraînement annulaire et soit déplaçable en direction axiale relativement au deuxième entraînement annulaire,
un deuxième corps magnétique étant relié au boîtier du deuxième frein (5),
en particulier fixé solidement,
en particulier, le corps magnétique et le boîtier de la deuxième frein (5) étant réalisés en une seule pièce,
le boîtier du deuxième frein (5) étant relié à la partie supérieure (2) du réducteur,
un deuxième disque d'ancrage étant disposé axialement entre le deuxième support de garniture de frein et le deuxième corps magnétique,
le deuxième disque d'ancrage étant relié de manière solidaire en rotation au deuxième corps magnétique et disposé de manière déplaçable en direction axiale relativement au deuxième corps magnétique,
des deuxièmes éléments de ressort supportés sur le deuxième corps magnétique, en particulier des deuxièmes éléments de ressort espacés uniformément les uns des autres en direction périphérique, appuyant sur le deuxième disque d'ancrage,
un deuxième bobinage étant reçu dans le deuxième corps magnétique, en particulier un deuxième bobinage, en particulier bobinage annulaire, étant reçu dans une deuxième cavité annulaire du deuxième corps magnétique et/ou relié de manière adhérente,
sur le côté opposé au deuxième disque d'ancrage du deuxième support de garniture de frein, une deuxième surface de freinage étant formée sur le boîtier, en particulier sur une face intérieure du deuxième boîtier, du deuxième frein (5),
en particulier, des deuxièmes boulons fixés au deuxième corps magnétique traversant chacun un évidement respectif du deuxième disque d'ancrage ou le traversant,
en particulier, le deuxième support de garniture de frein comportant axialement des deux côtés une garniture de frein respective.

11. Motor-réducteur selon l'une des revendications précédentes,
**caractérisé en ce que**
le premier frein (1) est actionnable électromagnétiquement,
de sorte qu'en alimentant électriquement le premier bobinage, le disque d'ancrage est attiré vers le premier corps magnétique contre la force de ressort générée par les premiers éléments de ressort, et qu'en n'alimentant pas électriquement le premier bobinage, les premiers éléments de ressort appuient le disque d'ancrage vers le premier support de garniture de frein, qui est ainsi pressé sur la première surface de freinage ou y est.

12. Motor-réducteur selon l'une des revendications précédentes,
**caractérisé en ce que**
la deuxième frein (5) est actionnable électromagnétiquement,
de sorte qu'en alimentant électriquement le deuxième bobinage, le disque d'ancrage est attiré vers le deuxième corps magnétique contre la force de ressort générée par les deuxièmes éléments de ressort, et qu'en n'alimentant pas électriquement le deuxième bobinage, les deuxièmes éléments de ressort appuient la disque d'ancrage vers le deuxième support de garniture de frein, qui est ainsi pressé sur la deuxième surface de freinage ou y est.

13. Motor-réducteur selon l'une des revendications précédentes,
**caractérisé en ce que**
- sur la face extérieure du réducteur, en particulier sur la partie supérieure (2),
ou
- sur la face extérieure de la partie supérieure (2)
une surface plane est formée, qui est réalisée comme couronne circulaire et dans laquelle des perçages axiaux sont introduits,
en particulier dans lesquels des vis sont vissées, dont les têtes de vis pressent le boîtier du premier frein (1) contre la partie supérieure (2).

14. Système avec électronique de commande et motor-réducteur selon l'une des revendications précédentes,
**caractérisé en ce que**
l'électronique de commande est reliée au premier frein (1) au moyen d'une première ligne de signal électrique,
l'électronique de commande étant reliée au deuxième frein (5) au moyen d'une deuxième ligne de signal électrique,
en particulier, l'électronique de commande étant conçue de manière appropriée de sorte que la vitesse de rotation de l'arbre de rotor, après activation du premier frein (1) avec le deuxième frein (5) desserré, soit surveillée pour une diminution et, en cas de diminution trop faible ou inadmissible ou en cas de vitesse de rotation constante ou croissante, le premier frein (1) soit activé en plus, en particulier, l'électronique de commande étant disposée dans un convertisseur, lequel alimente électriquement le moteur électrique (6).

15. Système selon l'une des revendications précédentes,
**caractérisé en ce que**
un moyen de détection du courant moteur du moteur électrique (6) et un moyen de détermination de la tension moteur du moteur électrique (6) sont reliés à l'électronique de commande,
en particulier, l'électronique de commande étant conçue de manière appropriée pour déterminer, à partir des valeurs détectées du courant moteur et de la tension moteur, une valeur du couple transmis par le moteur électrique (6) au réducteur via l'arbre de rotor.
